(19) Europäisches Patentamt / European Patent Office / Office européen des brevets

(11) **EP 2 959 609 B1**

(12) **EUROPEAN PATENT SPECIFICATION**

(45) Date of publication and mention
of the grant of the patent:
**06.06.2018 Bulletin 2018/23**

(21) Application number: **14716306.7**

(22) Date of filing: **08.04.2014**

(51) Int Cl.:
*H04B 7/06* (2006.01)        *H04B 17/373* (2015.01)

(86) International application number:
**PCT/EP2014/057097**

(87) International publication number:
**WO 2015/154800 (15.10.2015 Gazette 2015/41)**

(54) **METHODS AND NETWORK NODES IN A WIRELESS COMMUNICATION NETWORK**

VERFAHREN UND NETZWERKKNOTEN IN EINEM FUNKKOMMUNIKATIONSNETZ

PROCÉDÉS ET NOEUDS DE RÉSEAU DANS UN RÉSEAU DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **Huawei Technologies Co. Ltd.
Shenzhen, Guangdong 518129 (CN)**

(72) Inventors:
• **CHEN, Jianjun**
  **S-22369 Lund (SE)**
• **HU, Sha**
  **S-22369 Lund (SE)**
• **RUSEK, Fredrik**
  **22369 Lund (SE)**

(74) Representative: **Körber, Martin Hans et al
Mitscherlich PartmbB
Patent- und Rechtsanwälte
Sonnenstrasse 33
80331 München (DE)**

(56) References cited:
**WO-A1-2012/040935     US-A1- 2011 261 713
US-A1- 2013 343 282**

**Description**

**TECHNICAL FIELD**

Implementations described herein generally relate to a mobile station and a method in a mobile station. In particular, a mechanism is herein described, for predicting a channel state information metric of a downlink channel of a radio network node in a wireless communication network.

**BACKGROUND**

A mobile station, also known as a User Equipment (UE), wireless terminal and/ or mobile terminal is enabled to communicate wirelessly in a wireless communication network, sometimes also referred to as a cellular radio system. The communication may be made, e.g., between user equipment, between a user equipment and a wire connected telephone and/ or between a user equipment and a server via a Radio Access Network (RAN) and possibly one or more core networks. The wireless communication may comprise various communication services such as voice, messaging, packet data, video, broadcast, etc.

The mobile station may further be referred to as mobile telephone, cellular telephone, computer tablet or laptop with wireless capability, etc. The mobile station in the present context may be, for example, portable, pocket-storable, hand-held, computer-comprised, or vehicle-mounted mobile devices, enabled to communicate voice and/ or data, via the radio access network, with another entity, such as another mobile station, a stationary entity or a server.

The wireless communication network covers a geographical area which is divided into cell areas, with each cell area being served by a radio network node, network node or base station, e.g., a Radio Base Station (RBS) or Base Transceiver Station (BTS), which in some networks may be referred to as "eNB", "eNodeB", "NodeB" or "B node", depending on the technology and/ or terminology used.

Sometimes, the expression "cell" may be used for denoting the radio network node itself. However, the cell may also in normal terminology be used for the geographical area where radio coverage is provided by the radio network node at a base station site. One network node, situated on the base station site, may serve one or several cells. The radio network nodes may communicate over the air interface operating on radio frequencies with any mobile station within range of the respective radio network node.

In some radio access networks, several network nodes may be connected, e.g., by landlines or microwave, to a Radio Network Controller (RNC), e.g., in Universal Mobile Telecommunications System (UMTS). The RNC, also sometimes termed Base Station Controller (BSC), e.g., in GSM, may supervise and coordinate various activities of the plural radio network nodes connected thereto. GSM is an abbreviation for Global System for Mobile Communications (originally: Groupe Special Mobile).

In 3rd Generation Partnership Project (3GPP) Long Term Evolution (LTE), radio network nodes, which may be referred to as eNodeBs or eNBs, may be connected to a gateway, e.g., a radio access gateway, to one or more core networks. LTE is based on the GSM/ EDGE and UMTS/ HSPA network technologies, increasing the capacity and speed using a different radio interface together with core network improvements.

LTE-Advanced, i.e. LTE Release 10 and later releases are set to provide higher bitrates in a cost efficient way and, at the same time, completely fulfil the requirements set by International Telecommunication Union (ITU) for the International Mobile Telecommunications (IMT)-Advanced, also referred to as 4G (i.e. 4th Generation).

In the present context, the expressions downlink, downstream link or forward link may be used for the transmission path from the radio network node to the mobile station. The expression uplink, upstream link or reverse link may be used for the transmission path in the opposite direction, i.e., from the mobile station to the radio network node.

In 3G and 4G mobile systems, link adaptation based on channel conditions is supported. For example in LTE, a mobile station reports its Channel State Information (CSI) to the radio network node/ eNodeB such that the radio network node/ eNodeB can select a suitable scheme when it transmits data to the mobile station through the downlink channel.

In the LTE standardisation document 1, three quality indicators are defined that may serve as a benchmark for the transmission quality in the downlink, and may be measured by the mobile station and reported to the radio network node in the CSI report. These three quality indicators are Channel Quality Indicator (CQI), Precoding Matrix Index (PMI), and Rank Indication (RI).

CQI is an index between 0 and 15, indicating the highest modulation and code rate at which the Block Error Rate (BLER) of the channel being analysed does not exceed 10%.

PMI indicates the best precoding matrix used for close-loop spatial multiplexing mode.

RI is a measurement, indicating the best rank of the transmitted downlink signal.

The mobile station may measure any, some or all of these three quality indicators and transmit the information in the uplink to the radio network node which then may adapts the signal transmission in the downlink accordingly, although this is not mandatory. The channel quality measurement and CQI / PMI / RI estimation methodologies at the mobile station are implementation specific. Thus, the manufacturers /chipset makers have certain freedom in algorithms and implementation.

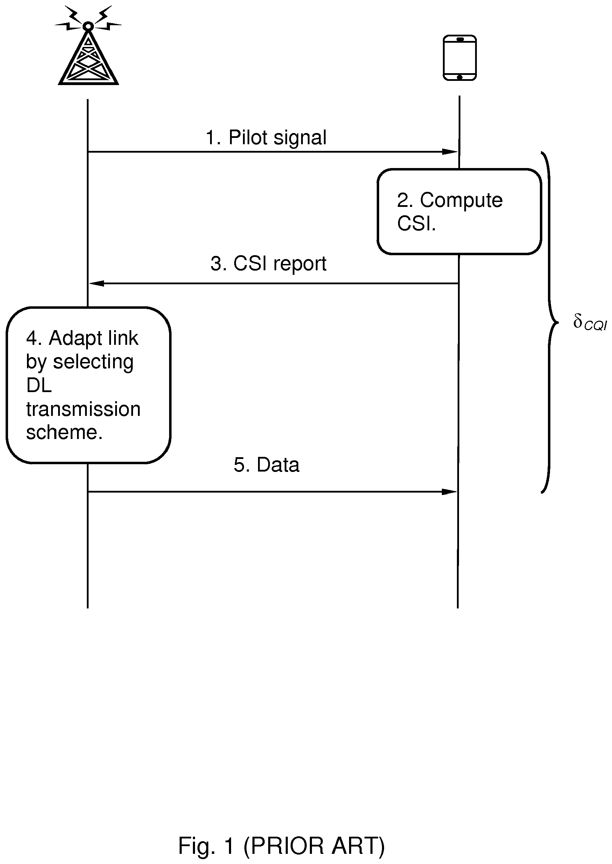

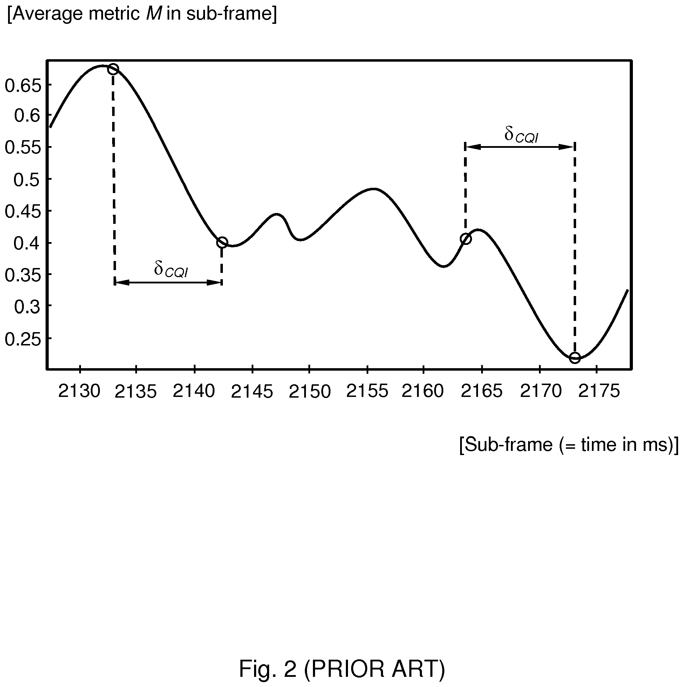

In LTE system, there is a CQI feedback delay, $\delta_{CQI}$, which e.g. may be 8 ms long. This delay , $\delta_{CQI}$ is the difference in time between the moment that the mobile station reports a certain CQI and the time that the radio network node transmits data to this mobile station according to the reported CQI (which may not be exactly the same as the reported). Because of this CQI feedback delay, and since the channel between the mobile station and the radio network node keeps on varying, an optimally chosen CQI index based on the channel information at the time *t*, is not going to be optimal at time *t* + $\delta_{CQI}$, see **Figure 1** and **Figure 2** which are illustrating this problem.

Figure 1 illustrates an example of the general link adaptation process while Figure 2 illustrates channel variation and CQI feedback delay, EPA channel at a mobile station speed of 10 km/h, corresponding to Doppler ~20Hz.

As may be understood from Figure 2, when the Doppler is very small, such kind of CQI reporting without handling the CQI delay still works fine. When no channel prediction is applied, the link adaptation may work quite well if the product between the Doppler (in Hz) and the CQI delay (in second) is less than 0.01. Otherwise, fast link adaptation may not work well, and adaptation based on averaged Signal to Noise Ratio (SNR) within a period of time may work better and should be applied instead. This means that, when the CQI delay is e.g. 8 ms in LTE downlink and fast link adaptation is desired, the Doppler should be roughly 1~2 Hz. This is a very tight constraint, since the Doppler of a mobile station carried by walking persons is around 5~10 Hz. It would be valuable if this constraint may be relaxed, so that fast link adaptation may be applied and throughput gains thereby achieved at Doppler ranges corresponding to walking speed, as walking while speaking in the mobile station is a rather frequent user behaviour.

Efforts have been made for making channel metric prediction by applying different approaches such as e.g. linear regression, and somewhat more complicated methods including cubic spline based prediction and linear Minimum Mean Square Error (MMSE) based prediction.

In some prior art, short-term averaging and first order adaptive Infinite Impulse Response (IIR) filters are used for prediction. They are however more suitable when the mobile station speed is high. Under high speed mobile station scenarios, CQI feedback delay is significantly larger than the channel coherence time. However, short-term averaging and first order adaptive IIR filters are not appropriate for prediction at, or under walking speed of the mobile station, as their prediction performance will degrade at low Doppler, corresponding to walking speed or slower.

Also, investigations have been made concerning short-term averaging, linear prediction, cubic-spline based extrapolation, Wiener filter based prediction, and an approach by weighted combining of extrapolation and short-term average.

Linear regression based prediction is a straight-forward prediction approach with simple mathematical representation. Its performance can hardly be beaten when the Doppler of the mobile station is very low, for example under 2 Hz Doppler. However, its performance degrades fast when Doppler increases. Moreover, it has the problem of overshoots when the varying trend changes at peaks and dips.

Cubic spline based extrapolation for predicting the Signal to Interference and Noise Ratio (SINR) has also been investigated. Cubic spline has good performance for interpolation. However, for extrapolation, the performance is in general not satisfying. There are several reasons for this behaviour. Firstly, unlike interpolation where the boundary conditions have limited impact to the interpolation performance, the boundary-condition setting has huge impact to the extrapolation performance, especially when the prediction length is long forward (The boundary conditions setting here include how to set the derivatives at the end points). Secondly, when there is noise on the data observations, the impact of the noise for interpolation is limited, while the impact of the noise for extrapolation is heavy, especially by the noise at the end points. For this reason, this approach is inappropriate for channel prediction.

In practice, in the time direction, the channel information is correlated. Therefore, if the correlation coefficients are known, the channel information in the future may be estimated/ predicted based on the latest channel information. In such case, the MMSE solution may be a possible approach. Such prediction can be based on the metrics like channel response, SINR, Resource Block Information Rate (RBIR), Mutual Information (MI), Effective Exponential SINR Mapping (EESM), etc.

The MMSE based prediction approach may be directly applied in the prediction of other similar metrics mentioned earlier. Within a short period, for example 1 second, it may be assumed that the metric values of these sub-frames form a stationary process. Then, the auto-correlation of the process may be computed and form a Yule-Walker equation system to predict the metric. First, the sample autocorrelation for samples windows may be computed [$t$-$T_0$,$t$], as:

$$\gamma(t, \tau) = E\{(\bar{M}[t_0] - M_{mean})(\bar{M}[t_0 + \tau] - M_{mean})\}, t_0 \ \varepsilon[t - T_0, t - \tau],$$

where $M_{mean}$ is the mean of the metric $M$ within the sample interval which may be e.g. a few seconds long.

The predicted metric value using an order *p* Wiener filter is given by:

$$\overline{M}(t + p) = \sum_{l=0}^{P-1} w(l)\, \overline{M}[t - l] + M_{mean},$$

where the prediction filter is computed through the Yule-Walker equations, that is:

$$w = R^{-1}r \text{ ,}$$

where the prediction filter coefficients w is:

$$w = \big[w(0), w(1),..., w(p-1)\big]^T$$

and the autocorrelation matrix R is:

$$R = \begin{pmatrix} \gamma(t,0) & \gamma(t,1) & ... & \gamma(t,p-1) \\ \gamma(t,1) & \gamma(t,0) & ... & \gamma(t,p-2) \\ ... & ... & ... & ... \\ \gamma(t,p-1) & \gamma(t,p-2) & ... & \gamma(t,0) \end{pmatrix}$$

and r is:

$$r = \big[\gamma(t,\delta_{CQI}), \gamma(t,\delta_{CQI}+1),..., \gamma(t,\delta_{CQI}+p-1)\big]^T .$$

The performance of this linear MMSE-based *M* prediction may depend on many issues: If the correlation between the history metric values and the future metric values at the time to be predicted is strong, then a good performance can be expected. However, this is directly related to the Doppler and the value of $\delta_{CQI}$, the larger Doppler or larger $\delta_{CQI}$ will results in worse prediction performance. The accuracy of the sample auto-correlation will affect the performance. To have a more accurate sample autocorrelation, the channel metric is required to be stationary for a long enough time so that abundant samples to estimate the autocorrelation coefficients are collected. Again, this requires low Doppler, and some more conditions so that to satisfy the stationary condition. When the Doppler is high or $\delta_{CQI}$ is large, then the correlation vector r is very close to zero. In that case, the predicted metric value will converge to the short-term mean. This makes intuitive sense because from the latest metric values, no conclusion may be drawn concerning the metric values at the future time of prediction due to the small correlation. Further, the performance also depends on the choice of the filter order *p*. The filter order *p* may be e.g. between 5 and 20. When the filter order *p* is small, there will not be sufficient information for prediction while, when the order is big, the complexity grow high, especially for the matrix inversion operation.

To conclude disadvantages, limitations and problems with different prior art solutions, the prediction performance of the Short-term averaging based prediction is not good for low Doppler, corresponding to a mobile station speed below 10 km/h.

Linear regression based prediction is not suitable for a non-static mobile station due to channel fading. Moreover, Linear regression based prediction has the problem of over-shooting, as it usually render prediction values that are higher than the peak at time right after the fading peak, and lower than the dip at time right after the fading dip.

Cubic-spline based prediction method is very sensitive to end-point conditions and thus works unsatisfying other than for very low speed of the mobile station and very low noise level.

Linear-MMSE based prediction method, still suffer from the over-shooting problem. Moreover, for these different metrics, their variation over time, caused by channel variation at the mobile station side are not really linear in nature, so linear method is in nature sub-optimal.

Consequently there is no satisfying solution for overcoming the problems associated with the CQI feed-back delay, $\delta_{CQI}$ in order to enable link adaptation, for mobile stations moving at walking speed.

US 2011/261713 A1 discloses a mobile station and a method for predicting CQI or PMI after a control delay. Further related technologies are disclosed in WO 2012/040935 A1.

## SUMMARY

It is therefore an object to obviate at least some of the above mentioned disadvantages and to predict a channel state information metric of a downlink channel of a radio network node in a wireless communication network.

This and other objects are achieved by the features of the appended independent claims. Further implementation forms are apparent from the dependent claims, the description and the figures.

According to a first aspect, a mobile station is provided, configured for predicting a channel state information metric of a downlink channel of a radio network node in a wireless communication network. The mobile station comprises a receiver, configured for receiving a wireless signal from a radio network node on the downlink channel. Further, the mobile station also comprises a processor, configured for determining a length of a feedback delay; and configured for predicting the channel state information metric of the channel on which the wireless signal was received, at a future point in time, corresponding to the determined length of the feedback delay, wherein said prediction is based on a non-linear predicting algorithm. The processor is configured for predicting the channel state information metric based on the non-linear predicting algorithm by collecting channel state information metric data of the downlink channel, to be used as training data, during a training data period. Further, the processor is configured for estimating a conditional probability distribution function, within a period, based on the collected training data. In further addition, the processor is configured for computing the predicted channel state information metric based on the estimated conditional probability distribution function at the future point in time, corresponding to the determined length of the feedback delay.

By utilising a non-linear predicting algorithm for predicting the channel state information metric, the channel state metric variation is predicted with improved precision, in particular when the user of the mobile station is moving at walking speed. By predicting the channel state information metric at a future point in time, corresponding to the length of the feedback delay, the mobile station can provide feed-back based on a predicted future channel state, thereby enabling an improved link adaptation. Thereby a higher throughput is achieved, as the radio network node may adapt modulation scheme and code rate to a predicted channel state which is closer to the real channel state than according to conventional channel state prediction methods, leading to less retransmission and higher throughput.

An advantage by collecting training data comprising history channel state information, it is possible to make a conditional expectation of the probability distribution function at the future point in time, corresponding to the determined length of the feedback delay, leading to an improved prediction of the channel state information metric.

In a first possible implementation of the mobile station according to the first aspect, the conditional probability distribution function may be estimated by: $p(\overline{M}[t + \delta_{CQI}]|\{\overline{M}[t], \overline{M}[t - 1], ..., \overline{M}[t - L]\})$, where $\overline{M}$ is the mean channel state information metric, $\delta_{CQI}$ is the determined feedback delay, and L is an integer within an interval of several or tens of milliseconds.

Thereby, an improved prediction of the channel state information metric at the future point in time is made.

In a second possible implementation of the mobile station according to the first aspect, or the first implementation of the first aspect, the conditional probability distribution function may be estimated by: $p(\overline{M}[t + \delta_{CQI}]|\{\overline{M}[t], \overline{M}[t - L_0], \overline{M}[t - 2L_0]\})$, where $\overline{M}$ is the mean channel state information metric, $\delta_{CQI}$ is the determined feedback delay, and $L_0$ is an integer within an interval $0 \leq L_0 \leq 10$.

By down sampling the channel state metric sequence a few times, calculations channel state information metric may be made also with limited training data available. Also, difficulties that may arise when estimating the continuous conditional probability distribution function may be avoided, thanks to simplified calculation.

In a third possible implementation of the mobile station according to the first aspect, or any of the previous implementations of the first aspect, wherein the conditional probability distribution function may be estimated by: $p(\overline{M}[t + \delta_{CQI}]|\overline{M}[t], \overline{M}[t - L_0])$, where $\overline{M}$ is the mean channel state information metric, $\delta_{CQI}$ is the determined feedback delay, and $L_0$ is an integer within an interval $0 \leq L_0 \leq 10$.

By down sampling the channel state metric sequence a few times, calculations channel state information metric may be made also with limited training data available. Also, difficulties that may arise when estimating the continuous conditional probability distribution function may be avoided, thanks to simplified calculation.

In a fourth possible implementation of the first network node according to the first aspect, or any of the previous implementations of the first aspect, $L_0$ may be an integer within an interval $3 \leq L_0 \leq 5$.

Thereby, the estimation of the continuous conditional probability distribution function is simplified.

In a fifth possible implementation of the mobile station according to the first aspect, or any of the previous possible implementations of the first aspect, the processor may be further configured for performing quantization of channel state metric values into bins by running a quantization function, such that the continuous conditional probability distribution function becomes discrete.

An advantage in addition to other benefits of this implementation comprises enabling an efficient implementation of the non-linear prediction method.

In a sixth possible implementation of the mobile station according to the first aspect, or any of the previous possible implementations of the first aspect, the conditional mean is computed by;

$$\sum_{i=1}^{NBIN} p\big(Q\big(\bar{M}[t + \delta_{CQI}]\big) = Q_i \big| Q(\bar{M}[t]) , Q(\bar{M}[t - L_0]) \big) \times Q_i,$$

where $Q$ () is the quantization function; $Q_i$ is the centre of each respective quantization bin; *NBIN* is the number of quantization bins.

An advantage in addition to other benefits of this implementation comprises enabling an efficient implementation of the non-linear prediction method, as the computational complexity is further reduced.

In an seventh possible implementation of the mobile station according to the first aspect, or any of the previous possible implementations of the first aspect, the channel state information metric comprises any of: Mutual Information (MI), Effective Exponential Signal to interference and noise Mapping (EESM), Received Bit mutual Information Rate (RBIR), Signal to Noise Ratio (SNR), effective SNR, or a similar metric related to the quality of the downlink channel.

By utilising known metrics for determining the channel state of the downlink for mapping the predicted channel state information metric with a Channel Quality Indicator, implementation of the method is facilitated.

In a eighth possible implementation of the mobile station according to the first aspect, or any of the previous possible implementations of the first aspect, the processor is further configured for selecting a Channel Quality Indicator (CQI), based on the predicted channel state information metric of the channel; and wherein the mobile station further comprises a transmitter, configured for transmitting an index associated with the selected Channel Quality Indicator (CQI), to the radio network node.

By utilising known metrics for determining the channel state of the downlink for mapping the predicted channel state information metric with a Channel Quality Indicator (CQI), implementation of the method is facilitated. Further, by transmitting an index associated with the selected Channel Quality Indicator (CQI), the radio network node obtains feedback from the mobile station concerning the channel quality, using a minimum of bandwidth.

In a ninth possible implementation of the mobile station according to the first aspect, or any of the previous possible implementations of the first aspect, the processor is further configured for predicting the channel state information metric based on a linear prediction algorithm when the non-linear predicting algorithm is not performable due to insufficient amount of training data during the training data period.

An advantage with using the linear predicting algorithm as a back-up solution in combination with the disclosed non-linear predicting algorithm, when the amount of training data is too little. Thereby, robustness is improved and a better performance is achieved.

According to a second aspect, a method is provided, for use in a mobile station. The method aims at predicting a channel state information metric of a downlink channel of a radio network node in a wireless communication network. The method comprises receiving a wireless signal from a radio network node on the downlink channel. Also, the method further comprises determining length of a feedback delay. Additionally, the method furthermore comprises predicting the channel state information metric of the channel on which the wireless signal was received, at a future point in time, corresponding to the determined length of the feedback delay, wherein said prediction is at least partially based on a non-linear predicting algorithm. The prediction of the channel state information metric based on the non-linear predicting algorithm further comprises collecting channel state information metric data of the downlink channel, to be used as training data, during a training data period. Also, the non-linear predicting algorithm additionally comprises estimating conditional probability distribution function within a period, based on the collected training data. In addition, the non-linear predicting algorithm comprises computing the predicted channel state information metric based on the estimated conditional probability at the future point in time, corresponding to the determined length of the feedback delay.

By utilising a non-linear predicting algorithm for predicting the channel state information metric, the channel state metric variation is predicted with improved precision, in particular when the user of the mobile station is moving at walking speed. By predicting the channel state information metric at a future point in time, corresponding to the length of the feedback delay, the mobile station can provide feed-back based on a predicted future channel state, thereby enabling an improved link adaptation. Thereby a higher throughput is achieved, as the radio network node may adapt modulation scheme and code rate to a predicted channel state which is closer to the real channel state than according to conventional channel state prediction methods, leading to less retransmission and higher throughput.

An advantage by collecting training data comprising history channel state information, it is possible to make a conditional expectation of the probability distribution function at the future point in time, corresponding to the determined length of the feedback delay, leading to an improved prediction of the channel state information metric.

In a first possible implementation of the method according to the second aspect, the conditional probability distribution function may comprise: $p(\bar{M}[t + \delta_{CQI}] | \{\bar{M}[t], \bar{M}[t\text{-}1],...,\bar{M}[t\text{-}L]\})$, where $\bar{M}$ is the mean channel state information metric, $\delta_{CQI}$ is the determined feedback delay, and *L* is an integer within an interval of several or tens of milliseconds.

Thereby, an improved prediction of the channel state information metric at the future point in time is made.

In a second possible implementation of the method according to the second aspect, or the first implementation of the second aspect, the conditional probability distribution function may comprise: $p(\overline{M}[t + \delta_{CQI}]|\{\overline{M}[t], \overline{M}[t - L_0], \overline{M}[t - 2L_0]\})$, where $\overline{M}$ is the mean channel state information metric, $\delta_{CQI}$ is the determined feedback delay, and $L_0$ is an integer within an interval $0 \leq L_0 \leq 10$.

By down sampling the channel state metric sequence a few times, calculations channel state information metric may be made also with limited training data available. Also, difficulties that may arise when estimating the continuous conditional probability distribution function may be avoided, thanks to simplified calculation.

In a third possible implementation of the method according to the second aspect, or any of the previous possible implementations of the second aspect, the conditional probability distribution function may comprise: $p(\overline{M}[t + \delta_{CQI}]|\overline{M}[t], \overline{M}[t - L_0])$, where $\overline{M}$ is the mean channel state information metric, $\delta_{CQI}$ is the determined feedback delay, and $L_0$ is an integer within an interval $0 \leq L_0 \leq 10$.

By down sampling the channel state metric sequence a few times, calculations channel state information metric may be made also with limited training data available. Also, difficulties that may arise when estimating the continuous conditional probability distribution function may be avoided, thanks to simplified calculation.

In a fourth possible implementation of the method according to the second aspect, or any of the previous possible implementations of the second aspect, $L_0$ may be an integer within an interval $3 \leq L_0 \leq 5$.

Thereby, the estimation of the continuous conditional probability distribution function is simplified.

In a fifth possible implementation of the method according to the second aspect, or any of the previous possible implementations of the second aspect, wherein the method further may comprise quantization of the channel state metric values into bins by running a quantization function, such that the continuous conditional probability distribution function becomes discrete.

An advantage in addition to other benefits of this implementation comprises enabling an efficient implementation of the non-linear prediction method.

In a sixth possible implementation of the method according to the second aspect, or any of the previous possible implementations of the second aspect, the conditional mean may be computed by:

$$\sum_{i=1}^{NBIN} p\left(Q\left(\overline{M}[t + \delta_{CQI}]\right) = Q_i \middle| Q(\overline{M}[t]), Q(\overline{M}[t - L_0])\right) \times Q_i,$$

where $Q()$ is a quantization function; $Qi$ is the centre of each respective quantization bin; $NBIN$ is the number of quantization bins.

An advantage in addition to other benefits of this implementation comprises enabling an efficient implementation of the non-linear prediction method, as the computational complexity is further reduced.

In an seventh possible implementation of the method according to the second aspect, or any of the previous possible implementations of the second aspect, the channel state information metric may comprise any of: Mutual Information (MI), Effective Exponential Signal to interference and noise Mapping (EESM), Received Bit mutual Information Rate (RBIR), Signal to Noise Ratio (SNR), effective SNR, or a similar metric associated with the quality of the downlink channel.

An advantage is that implementation of the method thereby is facilitated.

In a eighth possible implementation of the method according to the second aspect, or any of the previous possible implementations of the second aspect, the method may further comprise selecting a Channel Quality Indicator (CQI), based on the predicted channel state information metric of the channel; and transmitting an index associated with the selected Channel Quality Indicator (CQI), to the radio network node.

By utilising known metrics for determining the channel state of the downlink for mapping the predicted channel state information metric with a Channel Quality Indicator, implementation of the method is facilitated. Further, by transmitting an index associated with the selected Channel Quality Indicator, the radio network node obtains feedback from the mobile station concerning the channel quality, using a minimum of bandwidth.

In a ninth possible implementation of the method according to the second aspect, or any of the previous possible implementations of the second aspect, the prediction of the channel state information metric may be further based on a linear prediction algorithm when the non-linear predicting algorithm is not performable due to insufficient amount of training data during the training data period,

An advantage with using the linear predicting algorithm as a back-up solution in combination with the disclosed non-linear predicting algorithm, when the amount of training data is too little. Thereby, robustness is improved and a better performance is achieved.

According to a further aspect, a computer program product comprising a computer readable storage medium storing program code thereon is provided, for use in a mobile station. The computer program product aims at predicting a channel state information metric of a downlink channel of a radio network node in a wireless communication network. The program code comprises instructions for executing a method comprising receiving a wireless signal from a radio network node on the downlink channel; determining length of a feed-back delay; and predicting the channel state information metric of the channel on which the wireless signal was received, at a future point in time, corresponding to the determined length of the feedback delay, wherein said prediction is at least partially based on a non-linear predicting algorithm.

By utilising a non-linear predicting algorithm for predicting the channel state information metric, the channel state metric variation is predicted with improved precision, in particular when the user of the mobile station is moving at walking speed. By predicting the channel state information metric at a future point in time, corresponding to the length of the feed-back delay, the mobile station can provide feed-back based on a predicted future channel state, thereby enabling an improved link adaptation. Thereby a higher throughput is achieved, as the radio network node may adapt modulation scheme and code rate to a predicted channel state which is closer to the real channel state than according to conventional channel state prediction methods, leading to less retransmission and higher throughput. Thereby an improved performance within the wireless communication network is provided.

Other objects, advantages and novel features of the described aspects will become apparent from the following detailed description.

## BRIEF DESCRIPTION OF THE DRAWINGS

Various embodiments are described in more detail with reference to attached drawings, illustrating examples of embodiments of the invention in which:

**Figure 1**   is an illustration over communication between a mobile station and a radio network node and feedback delay, according to prior art.

**Figure 2**   is a diagram illustrating downlink channel variation and feedback delay, according to prior art.

**Figure 3**   is a block diagram illustrating a wireless communication network according to an embodiment.

**Figure 4**   is a flow chart illustrating a method in a mobile station according to an embodiment.

**Figure 5**   is a flow chart illustrating a method in a mobile station according to an embodiment.

**Figure 6**   is a block diagram illustrating a mobile station according to an embodiment.

## DETAILED DESCRIPTION

Embodiments of the invention described herein are defined as a mobile station and a method in a mobile station, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

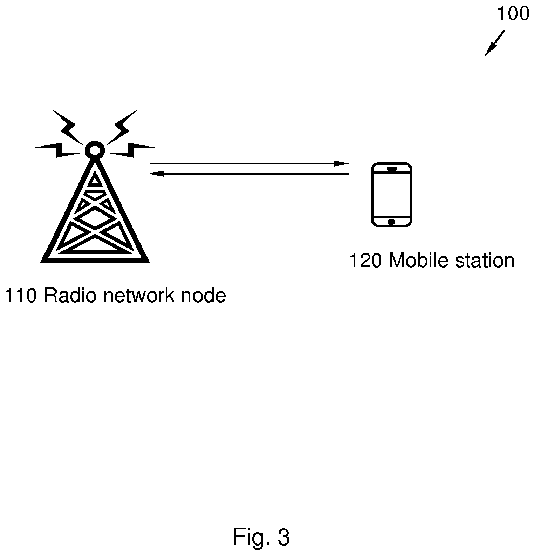

**Figure 3** is a schematic illustration over a wireless communication network **100** comprising a radio network node **110,** and a mobile station **120.** The radio network node 110 may be the serving radio network node of the mobile station 120.

The wireless communication network 100 may at least partly be based on radio access technologies such as, e.g., 3GPP LTE, LTE-Advanced, 4G, Evolved Universal Terrestrial Radio Access Network (E-UTRAN), Universal Mobile Telecommunications System (UMTS), Global System for Mobile Communications (originally: Groupe Special Mobile) (GSM)/ Enhanced Data rate for GSM Evolution (GSM/EDGE), Wideband Code Division Multiple Access (WCDMA), Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), just to mention some few options. The expressions "wireless communication network", "wireless communication system" and/ or "cellular telecommunication system" may within the technological context of this disclosure sometimes be utilised interchangeably.

The wireless communication network 100 may be configured to operate according to the Time Division Duplex (TDD) and/ or the Frequency Division Duplex (FDD) principle, according to different embodiments.

TDD is an application of time-division multiplexing to separate uplink and downlink signals in time, possibly with a Guard Period (GP) situated in the time domain between the uplink and downlink signalling. FDD means that the transmitter and receiver operate at different carrier frequencies.

The purpose of the illustration in Figure 3 is to provide a simplified, general overview of the wireless communication network 100 and the involved methods and nodes, such as the radio network node 110 and the mobile station 120 herein described, and the functionalities involved. The methods, radio network node 110 and mobile station 120 will subsequently, as a non-limiting example, be described in a 3GPP LTE/ LTE-Advanced environment. However the disclosed embodiments may operate in a wireless communication network 100 based on another access technology such as, e.g., any of the above already enumerated. Thus, although the embodiments of the invention are described based on, and using the lingo of, 3GPP LTE systems, it is by no means limited to 3GPP LTE. Further, the terms radio network node, network node, base station, and cell are used interchangeably in the sequel.

The illustrated radio network node 110 comprised in the wireless communication network 100 may send and receive radio signals in order to communicate wirelessly with the mobile station 120. In a first action, the radio network node 110 may send a pilot signal or similar, to be received by the mobile station 120, which in turn may perform channel quality measurements on the received signal.

It is to be noted that the illustrated network setting of one instance of the radio network node 110 and one mobile station 120 in Figure 3 is to be regarded as a non-limiting example of an embodiment only. The wireless communication network 100 may comprise any other number and/ or combination of the discussed radio network node 110 and/ or mobile station 120. A plurality of mobile stations 120 and another configuration of radio network nodes 110 may thus be involved in some embodiments of the disclosed invention.

Thus whenever "one" or "a/ an" radio network node 110 and/ or mobile station 120 is referred to in the present context, a plurality of radio network nodes 110, and/ or mobile stations 120 may be involved, according to some embodiments.

Further, the radio network node 110, according to some embodiments, may be configured for downlink transmission and uplink reception, and may be referred to, respectively, as e.g., a base station, a NodeB, an evolved Node Bs (eNB, or eNode B), a base transceiver station, an Access Point Base Station, a base station router, a Radio Base Station (RBS), a micro base station, a pico base station, a femto base station, a Home eNodeB, a sensor, a beacon device, a relay node, a repeater or any other network node configured for communication with the mobile station 120 over a wireless interface, depending, e.g., of the radio access technology and/ or terminology used.

The mobile station 120 may correspondingly be represented by, e.g. a wireless communication terminal, a mobile cellular phone, a Personal Digital Assistant (PDA), a wireless platform, a user equipment, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the radio network node 110, according to different embodiments and different vocabulary.

Some embodiments of the invention may define a modular implementation approach, and make it possible to reuse legacy systems such as e.g. standards, algorithms, implementations, components and products.

The herein described method provides a method to predict the channel state information with the current and some historic knowledge of the channel state. With the prediction, the mobile station 120 is enabled to report the CQI to the radio network node 110, based on the predicted channel state information at time $t + \delta_{\text{CQI}}$ instead of at time $t$.

In LTE downlink, consider subframe $t$ and denote the received signals as:

$$\boldsymbol{y}(k,l,t) = H(k,l,t)\boldsymbol{s}(k,l,t) + \boldsymbol{n}(k,l,t),$$

where $k$ denotes subcarrier $k$, $l$ denotes OFDM symbol $l$ within subframe $t$, $H$ is the channel matrix, $\boldsymbol{s}$ is the transmitted symbol, and $n$ is the noise vector, and $\boldsymbol{y}$ is the received signal vector.

Different mapping algorithms from channel $H$ ($k$, $l$, $t$) at time $t$ into certain metrics, such as e.g. SINR, EESM, Mutual Information (MI) based Exponential Signal to noise ratio Mapping (MIESM), Resource Block Information Rate (RBIR) etc., may be utilised in different embodiments. Based on said measurement, a certain CQI index may be selected to provide feedback to the radio network node 110 according to the measured metric on the downlink.

Although there are various different channel state information metrics $M$ such as e.g. SINR, EESM, MIESM and RBIR that may be used in different embodiments, their physical meanings are somewhat related and they follow the channel fading similarly. Thus a certain prediction method may be applied on these, or other similar, different metrics in a similar fashion. The disclosed method is generic and may be applied on any of these or other similar metrics.

Without losing generality, $M$ ($k$, $l$, $t$) may be used to denote the metric calculated based on the channel $H$ ($k$, $l$, $t$). The metric M ($k$, $l$, $t$) may be mutual information (MI) or any of the metrics calculated in EESM, MIESM, RBIR or other similar methods.

Thus it is herein proposed a non-linear method for channel state metric prediction, utilising the non-linearity nature of the channel state metric variation. Thereby it becomes enabled to predict the channel state metric $M$ with better precision, and therefore in the CQI feed-back calculation, the CQI can be computed based on the predicted channel state metric $M$. In some embodiments, the non-linear method in predicting the channel state metrics may be combined with linear methods for improving robustness and performance of the method.

Thereby, also a higher throughput is expected to be achieved, as a more appropriate modulation and coding scheme may be applied, leading to few retransmissions.

Subsequently, an embodiment of Non-Channel State Metric Prediction will be described.

A similar assumption on the channel state metric statistics may be made as previously described for the linear-MMSE based prediction approach. When the mobile station 120 is moving below walking speed, within a short period, for example 1 second, it may be assumed that the channel state metric values of these frames form a stationary process. Thus the following conditional probability may be estimated:

$$p\big(\overline{M}[t + \delta_{CQI}]\big|\{\overline{M}[t], \overline{M}[t - 1], \dots, \overline{M}[t - L]\}\big),$$

When this conditional probability distribution function is available, it is easy to predict the M value at *time t* $+\delta_{CQI}$, which is just the conditional expectation of the above conditional probability distribution function given the latest set of observations:

$$\mathsf{E}(\overline{M}[t], |\overline{M}[t - 1], \dots, \overline{M}[t - L]).$$

This conditional expectation based prediction is actually a non-linear Minimum Mean Square Error (MMSE) prediction.

The disclosed non-linear channel state metric prediction is limited by the fact that the conditional probability distribution function only may be trained with a given history of channel state information. Further, it may only be assumed that the channel is a stationary process within a short period, for example within 1 second or a few seconds. This means that the amount of training data will be limited. Although the channel state metrics values are bounded, they are usually continuous random variables, thus given very limited amount of training data, it is not possible to precisely estimate the conditional probability distribution function. Because of the scope of the conditional probability distribution function is of dimension $L + 1$, corresponding information in order to estimate the conditional probability distribution function may be lacking at most of the positions within the $L + 1$ dimensional space. $L$ is an integer within an interval of several or tens of milliseconds.

However, according to some embodiments, these practical issues may be handled by making simplifications. First, the problem of large dimension may be solved in the following way. It may be observed that the mobile station 120 moving at walking speed, there is strong correlation between channel instances that are very close in time. This may be illustrated by plotting the sequence of channel state metric values for a period; thereby the sequence looks like a continuously varying curve, where the neighbouring channel state metric values are quite close to each other. This is to say, at walking speed, the channel coherence time is several times larger than 1ms, which may be the time difference between neighbouring frames, namely neighbouring channel state metric values. Thus, when the channel state metric sequence is down-sampled a few times, not much information is lost. Therefore, instead of estimating the conditional probability distribution function $p(\overline{M}[t + S_{CQI}]|\overline{M}[t], \overline{M}[t - L_0])$, the following conditional probability distribution function may be made according to some embodiments: $p(\overline{M}[t + \delta_{CQI}]|\{\overline{M}[t], \overline{M}[t - L_0], \overline{M}[t - 2L_0]\})$, or alternatively, in some embodiments: $p(\overline{M}[t + \delta_{CQI}]|\overline{M}[t], \overline{M}[t - L_0])$, where $\overline{M}$ is the mean channel state information metric, $\delta_{CQI}$ is the determined feedback delay and where $L_0$ is a small integer. The proper value of $L_0$ may depend on the channel coherence time. In some embodiments, the value of $L_0$ may be set to value between 1 and 10, such as e.g. 3, 4 or 5, as has found appropriate in performed simulations.

Furthermore, the channel state metric values may be quantized into small bins, such that the continuous conditional probability distribution function becomes discrete. Thereby, the estimation of the conditional probability distribution function is reduced to counting numbers and doing averaging. Thereby, the above discussed difficulties of estimating the continuous conditional probability distribution function may be avoided, or at least somewhat reduced.

After the above simplifications, the quantized conditional probability distribution function may be estimated. Essentially, it may only be required to know the conditional mean for prediction. The following is a non-limiting example of the discrete conditional mean, which is trained with 1000 mean-MI values each were separated 1ms. Where the MI range is [0~1], and the quantization step size is 0.05, and the row index in the following table is the quantization index

of $\overline{M}[t - L_0]$, the column index is the quantization index of $\overline{M}[t]$. Those non-zero values in the table are the conditional mean, and the zero values in the table correspond to invalid prediction due to lack of corresponding information within the training data.

**Table 1** illustrates a non-limiting example of estimated quantized $M$ conditional probability distribution.

| | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0.1397 | 0.075 | 0 | 0 | 0 | 0 | 0 | 0 | 0 | 0 | 0 | 0 | 0 | 0 | 0 | 0 | 0 | 0 | 0 |
| 3 | 0 | 0.2167 | 0.075 | 0.1083 | 0 | 0 | 0 | 0 | 0 | 0 | 0 | 0 | 0 | 0 | 0 | 0 | 0 | 0 | 0 | 0 |
| 4 | 0 | 0 | 0.2861 | 0.2179 | 0.1125 | 0.075 | 0 | 0 | 0 | 0 | 0 | 0 | 0 | 0 | 0 | 0 | 0 | 0 | 0 | 0 |
| 5 | 0 | 0 | 0 | 0.3438 | 0.2639 | 0.15 | 0.125 | 0 | 0 | 0 | 0 | 0 | 0 | 0 | 0 | 0 | 0 | 0 | 0 | 0 |
| 6 | 0 | 0 | 0 | 0 | 0.425 | 0.375 | 0.3266 | 0.225 | 0.125 | 0 | 0 | 0 | 0 | 0 | 0 | 0 | 0 | 0 | 0 | 0 |
| 7 | 0 | 0 | 0 | 0 | 0 | 0.475 | 0.415 | 0.3306 | 0.2383 | 0.175 | 0 | 0 | 0 | 0 | 0 | 0 | 0 | 0 | 0 | 0 |
| 8 | 0 | 0 | 0 | 0 | 0 | 0 | 0.4897 | 0.3893 | 0.2714 | 0.25 | 0 | 0 | 0 | 0 | 0 | 0 | 0 | 0 | 0 | 0 |
| 9 | 0 | 0 | 0 | 0 | 0 | 0 | 0.525 | 0.5317 | 0.4432 | 0.3036 | 0.275 | 0 | 0 | 0 | 0 | 0 | 0 | 0 | 0 | 0 |
| 10 | 0 | 0 | 0 | 0 | 0 | 0 | 0 | 0.6 | 0.5786 | 0.4836 | 0.375 | 0.325 | 0 | 0 | 0 | 0 | 0 | 0 | 0 | 0 |
| 11 | 0 | 0 | 0 | 0 | 0 | 0 | 0 | 0 | 0.675 | 0.5906 | 0.5207 | 0.4083 | 0.3750 | 0 | 0 | 0 | 0 | 0 | 0 | 0 |
| 12 | 0 | 0 | 0 | 0 | 0 | 0 | 0 | 0 | 0 | 0.725 | 0.65 | 0.5375 | 0.4481 | 0.375 | 0 | 0 | 0 | 0 | 0 | 0 |
| 13 | 0 | 0 | 0 | 0 | 0 | 0 | 0 | 0 | 0 | 0 | 0 | 0.7068 | 0.6083 | 0.5036 | 0 | 0 | 0 | 0 | 0 | 0 |
| 14 | 0 | 0 | 0 | 0 | 0 | 0 | 0 | 0 | 0 | 0 | 0 | 0.775 | 0.7432 | 0.6730 | 0.5985 | 0.525 | 0 | 0 | 0 | 0 |
| 15 | 0 | 0 | 0 | 0 | 0 | 0 | 0 | 0 | 0 | 0 | 0 | 0 | 0 | 0.765 | 0.707 | 0.6714 | 0 | 0 | 0 | 0 |
| 16 | 0 | 0 | 0 | 0 | 0 | 0 | 0 | 0 | 0 | 0 | 0 | 0 | 0 | 0 | 0.8 | 0.7603 | 0.7139 | 0 | 0 | 0 |
| 17 | 0 | 0 | 0 | 0 | 0 | 0 | 0 | 0 | 0 | 0 | 0 | 0 | 0 | 0 | 0 | 0.85 | 0.7815 | 0.7667 | 0 | 0 |
| 18 | 0 | 0 | 0 | 0 | 0 | 0 | 0 | 0 | 0 | 0 | 0 | 0 | 0 | 0 | 0 | 0 | 0.875 | 0.85 | 0 | 0 |
| 19 | 0 | 0 | 0 | 0 | 0 | 0 | 0 | 0 | 0 | 0 | 0 | 0 | 0 | 0 | 0 | 0 | 0 | 0 | 0 | 0 |
| 20 | 0 | 0 | 0 | 0 | 0 | 0 | 0 | 0 | 0 | 0 | 0 | 0 | 0 | 0 | 0 | 0 | 0 | 0 | 0 | 0 |

**Table 1**

The quantization may cause performance loss under some circumstances, which may be illustrated by the following arbitrary example. It may be assumed that the channel state metric value is in the range of [0-1] and the quantization bin is 0.05, $L_0 = 4$, and also assumed that $\overline{M}[t] = 0.54$, $\overline{M}[t - L_0] = 0.57$. It may further be predicted $\overline{M}[t + \delta_{CQI}]$ using the nearest discrete conditional probability distribution bin, which may be:
$p(\overline{M}[t + \delta_{CQI}]|\{\overline{M}[t] = 0.525, \overline{M}[t - L_0] = 0.575\})$, in which the values 0.525 and 0.575 are the centre of the quantization bins corresponding to 0.54 and 0.57. Alternatively, the performance may be improved by using the 4 discrete conditional probability distribution bins surrounding the point (0.54, 0.57). Here they are the conditional probability distribution functions corresponding to:

$$p\big(\overline{M}[t + \delta_{CQI}]\big|\{\overline{M}[t] = 0.525, \overline{M}[t - L_0] = 0.525\}\big),$$

$$p\big(\overline{M}[t + \delta_{CQI}]\big|\{\overline{M}[t] = 0.525, \overline{M}[t - L_0] = 0.575\}\big),$$

$$p\big(\overline{M}[t + \delta_{CQI}]\big|\{\overline{M}[t] = 0.575, \overline{M}[t - L_0] = 0.525\}\big),$$

$$p\big(\overline{M}[t + \delta_{CQI}]\big|\{\overline{M}[t] = 0.575, \overline{M}[t - L_0] = 0.575\}\big).$$

The conditional probability distribution function:
$p(\overline{M}[t + \delta_{CQI}]|\{\overline{M}[t] = 0.54, \overline{M}[t - L_0] = 0.57\})$, may be computed as a weighted combination of the above mentioned 4 closest conditional probability distribution bins based on its distance to these 4 points. These 4 points are marked by a rectangle in Table 1 for illustration.

Since the amount of training data is limited, some parts of the conditional probability distribution may not be available, due to lack of training data, there may be no records that will fall into some certain quantization ranges, such as e.g. $\{\overline{M}[t] = 0.125, \overline{M}[t - L_0] = 0.175\}$. Thus, in some such conditions, no reliable prediction may be made. One solution may be, in some embodiments, to use the previous mentioned Linear-MMSE based prediction as a fall-back alternative, or other approaches like linear regression, because those approaches will always be able to give a prediction.

As previously explained, $p(\overline{M}[t + \delta_{CQI}]|\overline{M}[t], \overline{M}[t - L_0])$, may comprise sufficient amount of the total information present in the true conditional probability distribution $p(\overline{M}[t + \delta_{CQI}]|\overline{M}[t], M[t - 1], ...,\overline{M}[t - L])$, but there may still be some lost information, and the lost information may be partly regained by combining the information from other statistics, for example:
$p(\overline{M}[t + \delta_{CQI}]|\{\overline{M}[t]\overline{M}[t - L_0 - 1]\})$, and $p(\overline{M}[t + \delta_{CQI}]|\{\overline{M}[t], \overline{M}[t - L_0 - 1]\})$. It is thereby possible to utilise most of the information in:

$$p\big(\overline{M}[t + \delta_{CQI}]\big|\{\overline{M}[t], \overline{M}[t - 1], ..., \overline{M}[t - L]\}\big),$$

while avoiding the complexity and practical issues caused by high-dimensionality.

According to some embodiments, the non-linear prediction method may be implemented efficiently by regarding the channel as stationary within a short period. Thereby, the latest one or few seconds channel statistics may be utilised. In an example, the mean $M$ values of each frame may be used in some embodiments, to train the estimator to obtain the conditional probability distribution. There may be 1000 such mean $M$ values in the training data within 1 second in LTE system.

Thereby, a non-linear method is provided, for predicting the channel state metrics. The disclosed non-linear method may in some embodiments be combined with other methods, such as e.g. linear predicting methods, to achieve better robustness and better performance.

A performance evaluation according to an embodiment of the described method has been made. The linear MMSE based $M$ prediction has been integrated into a test program.

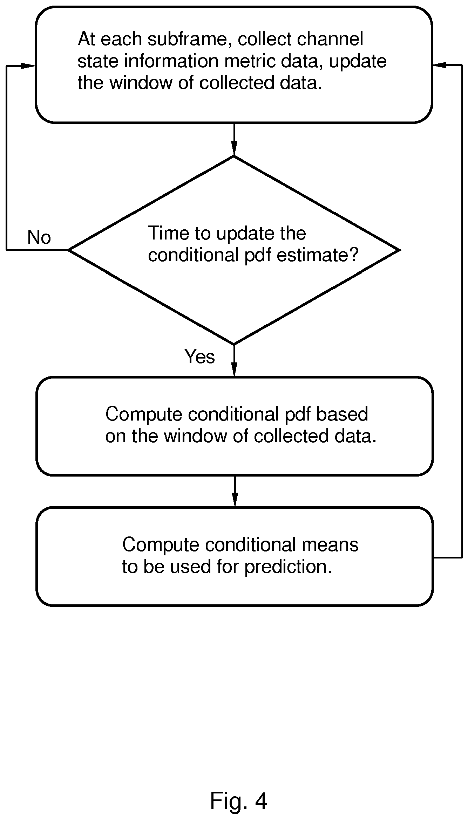

**Figure 4** illustrates an embodiment of the method.

At each subframe, channel state information metric data may be collected and the window of collected data may be updated. This data may also be referred to as training data.

In some embodiments, the conditional probability distribution function may be estimated/ re-estimated at a time interval which may be predetermined or configurable. Thus, when it is time to update the conditional probability distribution function estimate, the conditional probability distribution function may be estimated, based on the window of collected data. Then, the conditional means to be used for prediction may be computed.

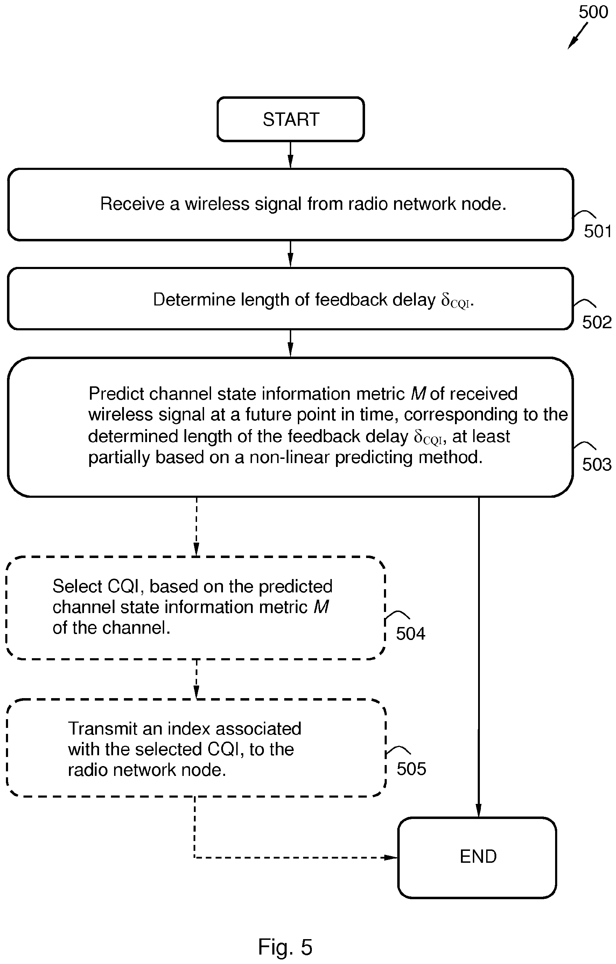

**Figure 5** is a flow chart illustrating embodiments of a method **500** for use in a mobile station 120 for, predicting a channel state information metric *M* of a downlink channel of a radio network node 110 in a wireless communication network 100.

The channel state information metric *M* may comprise any of: Mutual Information (MI), Effective Exponential Signal to interference and noise Mapping (EESM), Received Bit mutual Information Rate (RBIR), Signal to Noise Ratio (SNR), effective SNR, or a similar metric associated with the quality of the downlink channel such as for example: Reference Signal Received Power (RSRP), Reference Signal Received Quality (RSRQ), Channel State Information (CSI), Channel Quality Indicators (CQI), Signal to Noise and Interference Ratio (SINR), Signal to Interference Ratio (SIR), Signal to Noise plus Interference Ratio (SNIR), or any other appropriate measurement reflecting the strength and/ or quality of a signal, and/ or a ratio between a certain desired signal and undesired interference or noise.

To appropriately predict the channel state information metric *M,* the method 500 may comprise a number of actions **501-505.**

It is however to be noted that any, some or all of the described actions 501-505, may be performed in a somewhat different chronological order than the enumeration indicates, be performed simultaneously or even be performed in a completely reversed order according to different embodiments. Also, some actions such as e.g. actions 504 and/ or 505 may be performed only within some alternative embodiments. Further, it is to be noted that some actions may be performed in a plurality of alternative manners according to different embodiments, and that some such alternative manners may be performed only within some, but not necessarily all embodiments. The method 500 may comprise the following actions:

**Action 501**

A wireless signal is received from the radio network node 110 on the downlink channel.

**Action 502**

The length of a feedback delay, $\delta_{CQI}$ is determined.

The length of a feedback delay, $\delta_{CQI}$ may be determined by calculating the time it takes from reception 501 of the wireless signal until a feedback concerning a measured quality or strength of the received 501 signal may be provided back to the radio network node 110.

**Action 503**

The channel state information metric *M* of the channel on which the wireless signal was received is predicted at a future point in time, corresponding to the determined length of the feedback delay $\delta_{CQI}$, wherein said prediction is at least partially based on a non-linear predicting algorithm.

The prediction of the channel state information metric *M* may in some embodiments be made based on the non-linear predicting algorithm that further comprises: collecting channel state information metric data of the downlink channel, to be used as training data, during a training data period; estimating conditional probability distribution function *p* within a period, based on the collected training data; and computing the predicted channel state information metric *M* based on the estimated conditional probability at the future point in time, corresponding to the determined length of the feedback delay $\delta_{CQI}$.

The conditional probability distribution function *p* may in some embodiments comprise: $p(\overline{M}[t + \delta_{CQI}]|\{\overline{M}[t], \overline{M}[t - 1], ..., \overline{M}[t - L]\})$, where $\overline{M}$ is the mean channel state information metric, $\delta_{CQI}$ is the determined feedback delay, and L is an integer within an interval of several or tens of milliseconds.

However, in other embodiments, the conditional probability distribution function *p* may comprise: $p(\overline{M}[t + \delta_{CQI}]|\{\overline{M}[t], \overline{M}[t - L_0], \overline{M}[t - 2L_0]\})$, where $\overline{M}$ is the mean channel state information metric, $\delta_{CQI}$ is the determined feedback delay, and $L_0$ is an integer within an interval $0 \leq L_0 \leq 10$.

Further, in still other embodiments, the conditional probability distribution function *p* comprises: $p(\overline{M}[t + \delta_{CQI}]|\overline{M}[t], \overline{M}[t - L_0])$, where $\overline{M}$ is the mean channel state information metric, $\delta_{CQI}$ is the determined feedback delay, and $L_0$ is an integer within an interval $0 \leq L_0 \leq 10$.

In some further embodiments, $L_0$ may be an integer within an interval $3 \leq L_0 \leq 5$.

In some additional embodiments, a quantization of the channel state metric values into bins may be comprised, by running a quantization function Q, such that the continuous conditional probability distribution function *p* becomes discrete.

Furthermore, in some embodiments, the conditional mean may be computed by:

$$\sum_{i=1}^{NBIN} p\left(Q\left(\overline{M}[t + \delta_{CQI}]\right) = Q_i \middle| Q(\overline{M}[t]), Q(\overline{M}[t - L_0])\right) \times Q_i,$$ where Q () is a quantization function; Q is the centre of each respective quantization bin; *NBIN* is the number of quantization bins.

The prediction of the channel state information metric *M* may in some embodiments be further based on a linear prediction algorithm when the non-linear predicting algorithm is not performable due to insufficient amount of training data during the training data period.

### Action 504

This action may be performed in some, but not necessarily all embodiments.

A Channel Quality Indicator (CQI) is selected, based on the predicted channel state information metric *M* of the downlink channel.

### Action 505

This action may be performed in some, but not necessarily all embodiments.

An index associated with the selected Channel Quality Indicator (CQI) is transmitted to the radio network node 110.

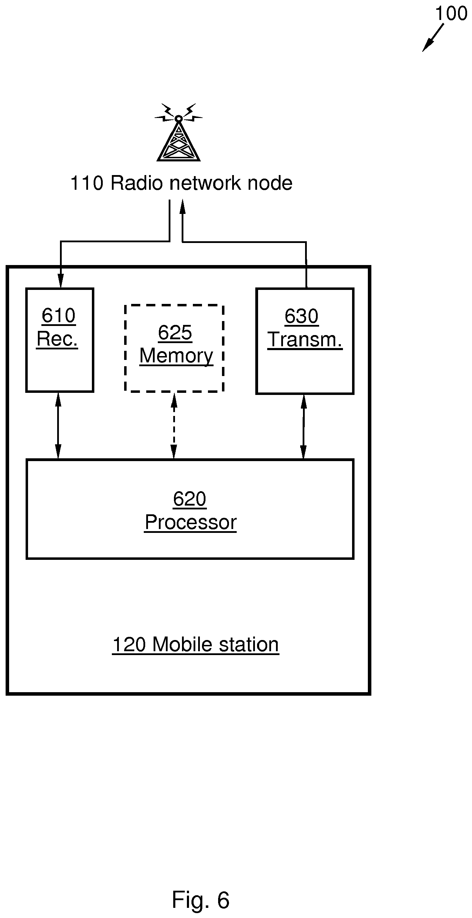

**Figure 6** illustrates an embodiment of a mobile station 120, configured for predicting a channel state information metric, *M,* of a downlink channel of a first network node 110 in a wireless communication network 100. The mobile station 120 is configured for performing the method 500 according to at least some of the previously described actions 501-505 for predicting the channel state information metric *M* of the downlink channel.

For enhanced clarity, any internal electronics or other components of the mobile station 120, not completely indispensable for understanding the herein described embodiments have been omitted from Figure 6.

The mobile station 120 comprises a receiver **610,** configured for receiving a wireless signal on the downlink channel from the radio network node 110. The receiver 610 may be configured for receiving radio signals over a wireless interface. The signals may be received from, e.g., the network node 110, another network node, or any other entity configured for communication within the wireless communication system 100, according to some embodiments.

In addition, the mobile station 120 also comprises a processor **620,** configured for determining a length of a feedback delay, $\delta_{CQI}$; and configured for predicting the channel state information metric, *M,* of the channel on which the wireless signal was received, at a future point in time, corresponding to the determined length of the feedback delay $\delta_{CQI}$, wherein said prediction is at least partially based on a non-linear predicting algorithm.

The processor 620 may be further configured for predicting the channel state information metric *M* based on the non-linear predicting algorithm by collecting channel state information metric data of the downlink channel, to be used as training data, during a training data period. Further, the processor 620 may be configured for estimating a conditional probability distribution function *p*, within a period, based on the collected training data. In addition, the processor 620 may also be configured for computing the predicted channel state information metric *M* based on the estimated conditional probability distribution function *p* at the future point in time, corresponding to the determined length of the feedback delay $\delta_{CQI}$.

The conditional probability distribution function *p* may in some embodiments comprise: $p(\overline{M}[t + \delta_{CQI}]|\{\overline{M}[t], \overline{M}[t - 1], ..., \overline{M}[t - L]\})$, where $\overline{M}$ is the mean channel state information metric, $\delta_{CQI}$ is the determined feedback delay, and *L* is an integer within an interval of several or tens of milliseconds.

However, in other embodiments, the conditional probability distribution function *p* may comprise: $p(\overline{M}[t + \delta_{CQI}]|\{\overline{M}[t], \overline{M}[t - L_0], \overline{M}[t - 2L_0]\})$, where $\overline{M}$ is the mean channel state information metric, $\delta_{CQI}$ is the determined feedback delay, and $L_0$ is an integer within an interval $0 \leq L_0 \leq 10$.

Further, in still other embodiments, the conditional probability distribution function *p* comprises: $p(\overline{M}[t + \delta_{CQI}]|\overline{M}[t], \overline{M}[t - L_0])$, where $\overline{M}$ is the mean channel state information metric, $\delta_{CQI}$ is the determined feedback delay, and $L_0$ is an integer within an interval $0 \leq L_0 \leq 10$.

In some further embodiments, $L_0$ may be an integer within an interval $3 \leq L_0 \leq 5$.

In some additional embodiments, a quantization of the channel state metric values into bins may be comprised, by running a quantization function *Q,* such that the continuous conditional probability distribution function *p* becomes discrete.

Furthermore, in some embodiments, the conditional mean may be computed by:

$$\sum_{i=1}^{NBIN} p\left(Q\left(\overline{M}[t + \delta_{CQI}]\right) = Q_i \middle| Q(\overline{M}[t]), Q(\overline{M}[t - L_0])\right) \times Q_i,$$ where Q () is a quantization function;

$Q_i$ is the centre of each respective quantization bin; $NBIN$ is the number of quantization bins.

The prediction of the channel state information metric $M$ may in some embodiments be further based on a linear prediction algorithm when the non-linear predicting algorithm is not performable due to insufficient amount of training data during the training data period.

The processor 620 may optionally be further configured for selecting a Channel Quality Indicator, based on the predicted channel state information metric $M$ of the channel; and wherein the mobile station 120 further comprises a transmitter 630, configured for transmitting an index associated with the selected Channel Quality Indicator, to the radio network node 110.

In further addition, the processor 620 may also be further configured for predicting the channel state information metric $M$ based on a linear prediction algorithm when the non-linear predicting algorithm is not performable due to insufficient amount of training data during the training data period.

Such processor 620 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the mobile station 120 also may comprise a transmitter **630,** configured for transmitting a wireless signal e.g. comprising signal measurements, and/ or a CQI measurement and/ or an index representing a CQI measurement. Such signal may be transmitted over a wireless interface according to different embodiments. The transmitter 630 may be configured for transmitting measurement data of the signal received from the network node 110, in some embodiments.

Furthermore, the mobile station 130 may further comprise at least one memory **625,** according to some embodiments. The optional memory 625 may comprise a physical device utilised to store data or programs, i.e., sequences of instructions, on a temporary or permanent basis. According to some embodiments, the memory 625 may comprise integrated circuits comprising silicon-based transistors. Further, the memory 625 may be volatile or non-volatile.

The channel state information metric $M$ may comprise any of: Mutual Information (MI), Effective Exponential Signal to interference and noise Mapping (EESM), Received Bit mutual Information Rate (RBIR), Signal to Noise Ratio (SNR), effective SNR, or a similar metric associated with the quality of the downlink channel such as for example: Reference Signal Received Power (RSRP), Reference Signal Received Quality (RSRQ), Channel State Information (CSI), Channel Quality Indicators (CQI), Signal to Noise and Interference Ratio (SINR), Signal to Interference Ratio (SIR), Signal to Noise plus Interference Ratio (SNIR), or any other appropriate measurement reflecting the strength and/ or quality of a signal, and/ or a ratio between a certain desired signal and undesired interference or noise.

The above described actions 501-505 to be performed in the mobile station 120 may be implemented through the one or more processors 620 in the mobile station 120, together with computer program product for performing at least some of the functions of the actions 501-505. Thus a computer program product, comprising instructions for performing the actions 501-505 in the mobile station 120 may perform a method 500 comprising at least some of the method actions 501-505, for predicting a channel state information metric M of a downlink channel of a radio network node 110 in a wireless communication network 100, when the computer program is loaded into a processor 620 of the mobile station 120.

Thus a computer program product comprising a computer readable storage medium storing program code thereon for use by a mobile station 120 in order to predict a channel state information metric $M$ of a downlink channel of a radio network node 110 in a wireless communication network 100. The program code may comprise instructions for executing a method 500 comprising: receiving 501 a wireless signal from a radio network node 110 on the downlink channel; determining 502 length of a feedback delay $\delta_{CQI}$; and predicting 503 the channel state information metric $M$ of the channel on which the wireless signal was received, at a future point in time, corresponding to the determined length of the feedback delay $\delta_{CQI}$, wherein said prediction is at least partially based on a non-linear predicting algorithm.

The computer program product mentioned above may be provided for instance in the form of a data carrier carrying computer program code for performing at least some of the actions 501-505 according to some embodiments when being loaded into the processor 620 of the mobile station 120. The data carrier may be, e.g., a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the mobile station 120 remotely, e.g., over an Internet or an intranet connection.

The terminology used in the description of the embodiments as illustrated in the accompanying drawings is not intended to be limiting of the described method 500 or mobile station 120. Various changes, substitutions and/ or alterations may be made, without departing from the invention as defined by the appended claims.

As used herein, the term "and/ or" comprises any and all combinations of one or more of the associated listed items. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items. A computer program may be stored/ distributed on a suitable medium, such as an optical storage medium or a solid-state medium supplied together with or as part of other hardware, but may also be distributed in other forms such as via Internet or other wired or wireless communication system.

**Claims**

1. A mobile station (120) configured for predicting a channel state information metric, M, of a downlink channel in a wireless communication network (100), which mobile station (120) comprises:

   a receiver (610), configured for receiving a wireless signal from a radio network node (110) on the downlink channel; and
   a processor (620), configured for determining a length of a feedback delay, $\delta_{CQI}$; and configured for predicting the channel state information metric, *M,* of the channel on which the wireless signal was received, at a future point in time, corresponding to the determined length of the feedback delay $\delta_{CQI}$, wherein said prediction is based on a non-linear predicting algorithm, wherein the processor (620) is configured for predicting the channel state information metric based on the non-linear predicting algorithm by:

   collecting channel state information metric data of the downlink channel, to be used as training data, during a training data period;
   estimating a conditional probability distribution function *p*, within a period, based on the collected training data; and
   computing the predicted channel state information metric *M* based on the estimated conditional probability distribution function *p* at the future point in time, corresponding to the determined length of the feedback delay $\delta_{CQI}$.

2. The mobile station (120) according to claim 1, wherein the conditional probability distribution function *p* is estimated by:

$$p\big(\bar{M}[t + \delta_{CQI}]\big|\{\bar{M}[t], \bar{M}[t-1], \dots, \bar{M}[t-L]\}\big),$$

where *M* is the mean channel state information metric, $\delta_{CQI}$ is the determined feedback delay, and *L* is an integer within an interval of several or tens of milliseconds.

3. The mobile station (120) according to claim 1, wherein the conditional probability distribution function *p* is estimated by:

$$p\big(\bar{M}[t + \delta_{CQI}]\big|\{\bar{M}[t], \bar{M}[t-L_0], \bar{M}[t-2L_0]\}\big),$$

where *M* is the mean channel state information metric, $\delta_{CQI}$ is the determined feedback delay, and $L_0$ is an integer within an interval $0 \le L_0 \le 10$.

4. The mobile station (120) according to claim 1, wherein the conditional probability distribution function *p* is estimated by:

$$p\big(\bar{M}[t + \delta_{CQI}]\big|\bar{M}[t], \bar{M}[t-L_0]\big),$$

where $\overline{M}$ is the mean channel state information metric, $\delta_{CQI}$ is the determined feedback delay, and $L_0$ is an integer within an interval $0 \le L_0 \le 10$.

5. The mobile station (120) according to any of claims 2-4, wherein $Lo$ is an integer within an interval $3 \leq L_0 \leq 5$.

6. The mobile station (120) according to any of claims 1-5, wherein the processor (620) is further configured for performing quantization of channel state metric values into bins by running a quantization function $Q$, such that the continuous conditional probability distribution function $p$ becomes discrete.

7. The mobile station (120) according to claim 6, wherein the conditional mean is computed by:

$$\sum_{i=1}^{NBIN} p\left(Q\left(\overline{M}[t + \delta_{CQI}]\right) = Q_i \middle| Q\left(\overline{M}[t]\right), Q\left(\overline{M}[t - L_0]\right)\right) \times Q_i,$$

where $Q()$ is the quantization function; $Q_i$ is the centre of each respective quantization bin; $NBIN$ is the number of quantization bins.

8. The mobile station (120) according to any of claims 1-7, wherein the channel state information metric $M$ comprises any of: Mutual Information (MI), Effective Exponential Signal to interference and noise Mapping (EESM), Received Bit mutual Information Rate (RBIR), Signal to Noise Ratio (SNR), effective SNR, or a similar metric related to the quality of the downlink channel.

9. The mobile station (120) according to any of claims 1-8, wherein the processor (620) is further configured for selecting a Channel Quality Indicator, based on the predicted channel state information metric $M$ of the channel; and wherein the mobile station (120) further comprises a transmitter (630), configured for transmitting an index associated with the selected Channel Quality Indicator, to the radio network node (110).

10. The mobile station (120) according to any of claims 1-9, wherein the processor (620) is further configured for predicting the channel state information metric $M$ based on a linear prediction algorithm when the non-linear predicting algorithm is not performable due to insufficient amount of training data during the training data period.

11. A method (500) in a mobile station (120) for predicting a channel state information metric M of a downlink channel in a wireless communication network (100), which method (500) comprises:

receiving (501) a wireless signal from a radio network node (110) on the downlink channel;
determining (502) length of a feedback delay, $\delta_{CQI}$; and
predicting (503) the channel state information metric $M$ of the channel on which the wireless signal was received, at a future point in time, corresponding to the determined length of the feedback delay $\delta_{CQI}$, wherein said prediction is based on a non-linear predicting algorithm, wherein the prediction (503) of the channel state information metric $M$ based on the non-linear predicting algorithm further comprises:

collecting channel state information metric data of the downlink channel, to be used as training data, during a training data period;;
estimating conditional probability distribution function $p$ within a period, based on the collected training data; and
computing the predicted channel state information metric $M$ based on the estimated conditional probability at the future point in time, corresponding to the determined (502) length of the feedback delay $\delta_{CQI}$.

12. The method (500) according to claim 11, wherein the conditional probability distribution function $p$ comprises:

$$p\left(\overline{M}[t + \delta_{CQI}] \middle| \{\overline{M}[t], \overline{M}[t - 1], \dots, \overline{M}[t - L]\}\right),$$

where $\overline{M}$ is the mean channel state information metric, $\delta_{CQI}$ is the determined feedback delay, and $L$ is an integer within an interval of several or tens of milliseconds.

13. The method (500) according to claim 11, wherein the conditional probability distribution function $p$ comprises:

$$p\left(\overline{M}[t + \delta_{CQI}] \middle| \{\overline{M}[t], \overline{M}[t - L_0], \overline{M}[t - 2L_0]\}\right),$$

where $\overline{M}$ is the mean channel state information metric, $\delta_{CQI}$ is the determined feedback delay, and $L_0$ is an integer within an interval $0 \leq L_0 \leq 10$.

**Patentansprüche**

1. Mobilstation (120), die zum Vorhersagen einer Kanalzustandsinformationsmetrik $M$ eines Downlink-Kanals in einem Funkkommunikationsnetz (100) konfiguriert ist, wobei die Mobilstation (120) Folgendes umfasst:

   einen Empfänger (610), der zum Empfangen eines Funksignals von einem Funknetzknoten (110) auf dem Downlink-Kanal konfiguriert ist; und
   einen Prozessor (620), der zum Bestimmen einer Länge einer Rückmeldungsverzögerung $\delta_{CQI}$ konfiguriert ist und zum Vorhersagen der Kanalzustandsinformationsmetrik $M$ des Kanals, auf welchem das Funksignal empfangen wurde, zu einem zukünftigen Zeitpunkt, welcher der bestimmten Länge der Rückmeldungsverzögerung $\delta_{CQI}$ entspricht, konfiguriert ist,
   wobei
   das Vorhersagen auf einem nichtlinearen Vorhersagealgorithmus basiert, wobei der Prozessor (620) zum Vorhersagen der Kanalzustandsinformationsmetrik basierend auf dem nichtlinearen Vorhersagealgorithmus durch Folgendes konfiguriert ist:

      Sammeln von Daten der Kanalzustandsinformationsmetrik des Downlink-Kanals, die während eines Trainingsdatenzeitraums als Trainingsdaten verwendet werden sollen;
      Schätzen einer bedingten Wahrscheinlichkeitsverteilungsfunktion $p$ innerhalb eines Zeitraums basierend auf den gesammelten Trainingsdaten; und
      Berechnen der vorhergesagten Kanalzustandsinformationsmetrik M basierend auf der geschätzten bedingten Wahrscheinlichkeitsverteilungsfunktion $p$ zu dem zukünftigen Zeitpunkt, welcher der bestimmten Länge der Rückmeldungsverzögerung $\delta_{CQI}$ entspricht.

2. Mobilstation (120) nach Anspruch 1, wobei die bedingte Wahrscheinlichkeitsverteilungsfunktion $p$ durch Folgendes geschätzt wird:

$$p\left(\overline{M}[t + \delta_{CQI}]\big|\{\overline{M}[t], \overline{M}[t-1], ..., \overline{M}[t-L]\}\right),$$

   wobei $\overline{M}$ die mittlere Kanalzustandsinformationsmetrik ist, $\delta_{CQI}$ die bestimmte Rückmeldungsverzögerung ist und L eine ganze Zahl innerhalb eines Intervalls von mehreren oder dutzenden Millisekunden ist.

3. Mobilstation (120) nach Anspruch 1, wobei die bedingte Wahrscheinlichkeitsverteilungsfunktion $p$ durch Folgendes geschätzt wird:

$$p\left(\overline{M}[t + \delta_{CQI}]\big|\{\overline{M}[t], \overline{M}[t-L_0], \overline{M}[t-2L_0]\}\right),$$

   wobei $\overline{M}$ die mittlere Kanalzustandsinformationsmetrik ist, $\delta_{CQI}$ die bestimmte Rückmeldungsverzögerung ist und $L_0$ eine ganze Zahl innerhalb eines Intervalls $0 \leq L_0 \leq 10$ ist.

4. Mobilstation (120) nach Anspruch 1, wobei die bedingte Wahrscheinlichkeitsverteilungsfunktion $p$ durch Folgendes geschätzt wird:

$$p\left(\overline{M}[t + \delta_{CQI}]\big|\overline{M}[t], \overline{M}[t-L_0]\right),$$

   wobei $\overline{M}$ die mittlere Kanalzustandsinformationsmetrik ist, $\delta_{CQI}$ die bestimmte Rückmeldungsverzögerung ist und

$L_0$ eine ganze Zahl innerhalb eines Intervalls $0 \leq L_0 \leq 10$ ist.

5. Mobilstation (120) nach einem der Ansprüche 2-4, wobei $L_0$ eine ganze Zahl innerhalb eines Intervalls $3 \leq L_0 \leq 5$ ist.

6. Mobilstation (120) nach einem der Ansprüche 1-5, wobei der Prozessor (620) ferner zum Durchführen einer Quantisierung von Kanalzustandsmetrikwerten in "Bins" durch das Anwenden einer Quantisierungsfunktion $Q$ konfiguriert ist, derart, dass die kontinuierliche bedingte Wahrscheinlichkeitsverteilungsfunktion $p$ diskret wird.

7. Mobilstation (120) nach Anspruch 6, wobei das bedingte Mittel durch Folgendes berechnet wird:

$$\sum_{i=1}^{NBIN} p\left(Q\left(\overline{M}[t + \delta_{CQI}]\right) = Q_i \,\middle|\, Q\left(\overline{M}[t]\right), Q\left(\overline{M}[t - L_0]\right)\right) \times Q_i \,,$$

wobei $Q()$ die Quantisierungsfunktion ist, $Q_i$ das Zentrum jedes entsprechenden Quantisierungs-"Bins" ist und *NBIN* die Anzahl der Quantisierungs-"Bins" ist.

8. Mobilstation (120) nach einem der Ansprüche 1-7, wobei die Kanalzustandsinformationsmetrik $M$ jegliche der Folgenden umfasst: MI (*Mutual Information* - gegenseitige Information), EESM (*Effective Exponential Signal to interference and noise Mapping* - effektive exponentielle SIR-Abbildung), RBIR (*Received Bit mutual Information Rate* - gegenseitige empfangene Bit-Informationsrate), SNR (*Signal to Noise Ratio* - Signal-Rausch-Verhältnis), effektives SNR oder eine ähnliche Metrik in Bezug auf die Qualität des Downlink-Kanals.

9. Mobilstation (120) nach einem der Ansprüche 1-8, wobei der Prozessor (620) ferner zum Auswählen eines Kanalqualitätsindikators basierend auf der vorhergesagten Kanalzustandsinformationsmetrik $M$ des Kanals konfiguriert ist, und wobei die Mobilstation (120) ferner einen Sender (630), der zum Senden eines Index im Zusammenhang mit dem ausgewählten Kanalqualitätsindikator an den Funknetzknoten (110) konfiguriert ist, umfasst.

10. Mobilstation (120) nach einem der Ansprüche 1-9, wobei der Prozessor (620) ferner zum Vorhersagen der Kanalzustandsinformationsmetrik $M$ basierend auf einem linearen Vorhersagealgorithmus konfiguriert ist, wenn der nichtlineare Vorhersagealgorithmus aufgrund einer unzureichenden Menge an Trainingsdaten während des Trainingsdatenzeitraums nicht durchführbar ist.

11. Verfahren (500) in einer Mobilstation (120) zum Vorhersagen einer Kanalzustandsinformationsmetrik $M$ eines Downlink-Kanals in einem Funkkommunikationsnetz (100), wobei das Verfahren (500) Folgendes umfasst:

Empfangen (501) eines Funksignals von einem Funknetzknoten (110) auf dem Downlink-Kanal;
Bestimmen (502) einer Länge einer Rückmeldungsverzögerung $\delta_{CQI}$; und
Vorhersagen (503) der Kanalzustandsinformationsmetrik $M$ des Kanals, auf welchem das Funksignal empfangen wurde, zu einem zukünftigen Zeitpunkt, welcher der bestimmten Länge der Rückmeldungsverzögerung $\delta_{CQI}$ entspricht,
wobei
die Vorhersage auf einem nichtlinearen Vorhersagealgorithmus basiert, wobei die Vorhersage (503) der Kanalzustandsinformationsmetrik $M$ basierend auf dem nichtlinearen Vorhersagealgorithmus ferner Folgendes umfasst:

Sammeln von Daten der Kanalzustandsinformationsmetrik des Downlink-Kanals, die während eines Trainingsdatenzeitraums als Trainingsdaten verwendet werden sollen;
Schätzen einer bedingten Wahrscheinlichkeitsverteilungsfunktion $p$ innerhalb eines Zeitraums basierend auf den gesammelten Trainingsdaten; und
Berechnen der vorhergesagten Kanalzustandsinformationsmetrik $M$ basierend auf der geschätzten bedingten Wahrscheinlichkeit zu dem zukünftigen Zeitpunkt, welcher der bestimmten (502) Länge der Rückmeldungsverzögerung $\delta_{CQI}$ entspricht.

12. Verfahren (500) nach Anspruch 11, wobei die bedingte Wahrscheinlichkeitsverteilungsfunktion $p$ Folgendes umfasst:

$$p\big(\bar{M}[t + \delta_{CQI}] \big| \{\bar{M}[t], \bar{M}[t-1], ..., \bar{M}[t-L]\}\big)$$,

wobei $\bar{M}$ die mittlere Kanalzustandsinformationsmetrik ist, $\delta_{CQI}$ die bestimmte Rückmeldungsverzögerung ist und L eine ganze Zahl innerhalb eines Intervalls von mehreren oder dutzenden Millisekunden ist.

13. Verfahren (500) nach Anspruch 11, wobei die bedingte Wahrscheinlichkeitsverteilungsfunktion *p* Folgendes umfasst:

$$p\big(\bar{M}[t + \delta_{CQI}] \big| \{\bar{M}[t], \bar{M}[t-L_0], \bar{M}[t-2L_0]\}\big)$$,

wobei $\bar{M}$ die mittlere Kanalzustandsinformationsmetrik ist, $\delta_{CQI}$ die bestimmte Rückmeldungsverzögerung ist und $L_0$ eine ganze Zahl innerhalb eines Intervalls $0 \le L_0 \le 10$ ist.

## Revendications

1. Station mobile (120) configurée pour prédire une mesure d'informations d'état de canal, M, d'un canal de liaison descendante dans un réseau de communication sans fil (100), laquelle station mobile (120) comprend :

   un récepteur (610), configuré pour recevoir un signal sans fil à partir d'un noeud de réseau radio (110) sur le canal de liaison descendante ; et
   un processeur (620), configuré pour déterminer une longueur d'un retard de rétroaction, $\delta_{CQI}$ ; et configuré pour prédire la mesure d'informations d'état de canal, M, du canal sur lequel le signal sans fil a été reçu, à un instant futur, correspondant à la longueur déterminée du retard de rétroaction $\delta_{CQI}$,
   dans laquelle
   ladite prédiction est basée sur un algorithme de prédiction non linéaire, dans lequel le processeur (620) est configuré pour prédire la mesure d'informations d'état de canal sur la base de l'algorithme de prédiction non linéaire en :

      collectant des données de mesure d'informations d'état de canal du canal de liaison descendante, à utiliser comme données d'apprentissage, pendant une période de données d'apprentissage ;
      estimer une fonction de distribution de probabilité conditionnelle p, au cours d'une période, sur la base des données d'apprentissage collectées ; et
      calculer la mesure d'informations d'état de canal prédite M sur la base de la fonction de distribution de probabilité conditionnelle estimée p à l'instant futur, correspondant à la longueur déterminée du retard de rétroaction $\delta_{CQI}$.

2. Station mobile (120) selon la revendication 1, dans laquelle la fonction de distribution de probabilité conditionnelle p est estimée par :

$$p\big(\bar{M}[t + \delta_{CQI}] \big| \{\bar{M}[t], \bar{M}[t-1], ..., \bar{M}[t-L]\}\big).$$

où $\bar{M}$ est la mesure d'informations d'état de canal moyenne, $\delta_{CQI}$ est le retard de rétroaction déterminé, et L est un entier dans un intervalle de plusieurs ou de dizaines de millisecondes.

3. Station mobile (120) selon la revendication 1, dans laquelle la fonction de distribution de probabilité conditionnelle p est estimée par :

$$p\big(\bar{M}[t + \delta_{CQI}] \big| \{\bar{M}[t], \bar{M}[t-L_0], \bar{M}[t-2L_0]\}\big),$$

où $\bar{M}$ est la mesure d'informations d'état de canal moyenne, $\delta_{CQI}$ est le retard de rétroaction déterminé, et $L_0$ est

EP 2 959 609 B1

un entier dans un intervalle 0≤L0≤10.

4. Station mobile (120) selon la revendication 1, dans laquelle la fonction de distribution de probabilité conditionnelle p est estimée par :

$$p\big(\bar{M}[t+\delta_{CQI}]\big|\bar{M}[t],\bar{M}[t-L_0]\big),$$

où $\bar{M}$ est la mesure d'informations d'état de canal moyenne, $\delta_{CQI}$ est le retard de rétroaction déterminé, et L0 est un entier dans un intervalle 0≤L0≤10.

5. Station mobile (120) selon l'une quelconque des revendications 2 à 4, dans laquelle L0 est un entier dans un intervalle 3≤L0≤5.

6. Station mobile (120) selon l'une quelconque des revendications 1 à 5, dans laquelle le processeur (620) est en outre configuré pour effectuer une quantification de valeurs de mesure d'état de canal en segments en exécutant une fonction de quantification Q, de sorte que la fonction de distribution de probabilité conditionnelle continue p devient discrète.

7. Station mobile (120) selon la revendication 6, dans laquelle la moyenne conditionnelle est calculée par :

$$\sum_{i=1}^{NBIN} p\big(Q\big(\bar{M}[t+\delta_{CQI}]\big)=Q_i\big|Q(\bar{M}[t]),Q(\bar{M}[t-L_0])\big)\times Q_i,$$

où Q () est la fonction de quantification ; $Q_i$ est le centre de chaque segment de quantification respectif ; NBIN est le nombre de segments de quantification.

8. Station mobile (120) selon l'une quelconque des revendications 1 à 7, dans laquelle la mesure d'informations d'état de canal M comprend l'un quelconque parmi : des informations mutuelles (MI), le mappage de signal exponentiel effectif sur brouillage et bruit (EESM), le débit d'informations mutuelles par bit reçu (RBIR), le rapport signal sur bruit (SNR), le rapport signal sur bruit effectif ou une mesure similaire liée à la qualité du canal de liaison descendante.

9. Station mobile (120) selon l'une quelconque des revendications 1 à 8, dans laquelle le processeur (620) est en outre configuré pour sélectionner un indicateur de qualité de canal, sur la base de la mesure d'informations d'état de canal prédite M du canal ; et dans laquelle la station mobile (120) comprend en outre un émetteur (630), configuré pour transmettre un indice associé à l'indicateur de qualité de canal sélectionné, au noeud de réseau radio (110).

10. Station mobile (120) selon l'une quelconque des revendications 1 à 9, dans laquelle le processeur (620) est en outre configuré pour prédire la mesure d'informations d'état de canal M sur la base d'un algorithme de prédiction linéaire lorsque l'algorithme de prédiction non linéaire n'est pas exécutable en raison d'une quantité insuffisante de données d'apprentissage pendant la période de données d'apprentissage.

11. Procédé (500) dans une station mobile (120) pour prédire une mesure d'informations d'état de canal M d'un canal de liaison descendante dans un réseau de communication sans fil (100), lequel procédé comprend de :

recevoir (501) un signal sans fil à partir d'un noeud de réseau radio (110) sur le canal de liaison descendante ; déterminer (502) la longueur d'un retard de rétroaction, $\delta_{CQI}$ ; et prédire (503) la mesure d'informations d'état de canal M du canal sur lequel le signal sans fil a été reçu, à un instant futur, correspondant à la longueur déterminée du retard de rétroaction $\delta_{CQI}$, dans lequel ladite prédiction est basée sur un algorithme de prédiction non linéaire, dans lequel la prédiction (503) de la mesure d'informations d'état de canal M basée sur l'algorithme de prédiction non linéaire comprend en outre de :

collecter des données de mesure d'informations d'état de canal du canal de liaison descendante, à utiliser comme données d'apprentissage, pendant une période de données d'apprentissage ; estimer une fonction de distribution de probabilité conditionnelle p au cours d'une période, sur la base des données d'apprentissage collectées ; et

calculer la mesure d'informations d'état de canal prédite M sur la base de la probabilité conditionnelle estimée à l'instant futur, correspondant à la longueur déterminée (502) du retard de rétroaction $\delta_{CQI}$.

12. Procédé (500) selon la revendication 11, dans lequel la fonction de distribution de probabilité conditionnelle p comprend :

$$p\big(\overline{M}[t + \delta_{CQI}]\big|\{\overline{M}[t], \overline{M}[t-1], \ldots, \overline{M}[t-L]\}\big),$$

où $\overline{M}$ est la mesure d'informations d'état de canal moyenne, $\delta_{CQI}$ est le retard de rétroaction déterminé, et L est un entier dans un intervalle de plusieurs ou de dizaines de millisecondes.

13. Procédé (500) selon la revendication 11, dans lequel la fonction de distribution de probabilité conditionnelle p comprend :

$$p\big(\overline{M}[t + \delta_{CQI}]\big|\{\overline{M}[t], \overline{M}[t-L_0], \overline{M}[t-2L_0]\}\big),$$

où $\overline{M}$ est la mesure d'informations d'état de canal moyenne, $\delta_{CQI}$ est le retard de rétroaction déterminé, et L0 est un entier dans un intervalle $0 \leq L0 \leq 10$.

Fig. 1 (PRIOR ART)

[Average metric *M* in sub-frame]

[Sub-frame (= time in ms)]

Fig. 2 (PRIOR ART)

100

110 Radio network node

120 Mobile station

Fig. 3

At each subframe, collect channel state information metric data, update the window of collected data.

Time to update the conditional pdf estimate?

No

Yes

Compute conditional pdf based on the window of collected data.

Compute conditional means to be used for prediction.

Fig. 4

500

START

Receive a wireless signal from radio network node. — 501

Determine length of feedback delay $\delta_{CQI}$. — 502

Predict channel state information metric $M$ of received wireless signal at a future point in time, corresponding to the determined length of the feedback delay $\delta_{CQI}$, at least partially based on a non-linear predicting method. — 503

Select CQI, based on the predicted channel state information metric $M$ of the channel. — 504

Transmit an index associated with the selected CQI, to the radio network node. — 505

END

Fig. 5

100

110 Radio network node

610
Rec.

625
Memory

630
Transm.

620
Processor

120 Mobile station

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011261713 A1

- WO 2012040935 A1